# EUROPEAN PATENT SPECIFICATION

(11) **EP 0 980 731 B1**
(45) Date of publication and mention of the grant of the patent: **11.02.2004**
(21) Application number: 99500148.4
(22) Date of filing: 17.08.1999
(51) Int. Cl.: B23B 31/30, F16C 33/66

(54) **Improvements in hydraulic rotary cylinders**
Verbesserungen an drehenden Hydraulikzylindern
Amélioration à des cylindres hydrauliques rotatifs

(30) Priority: 17.08.1998 ES 9801770; 03.12.1998 ES 9802537
(43) Date of publication of application: 23.02.2000
(73) Proprietor: Galvez Campos, José Luis, 50006 Zaragoza (ES)
(72) Inventor: Galvez Campos, José Luis, 50006 Zaragoza (ES)
(74) Representative: Carpintero Lopez, Francisco

(56) References cited:
- US-A- 4 549 822

## Description

### OBJECT OF THE INVENTION

The invention refers to improvements made in hydraulic rotary cylinders used in machine tools for acting on work tools.

The object of the improvements is to provide simultaneous and constant lubrication to the bearings on which the rotary shaft turns, based on the fact that a nozzle is executed on the pressure distribution piece and between both annular chambers established in the cylinder, extending as ducts which simultaneously connect with the bearings, in order to achieve a simultaneous and constant supply of oil to both bearings for the purpose of improving their lubrication.

Another object of the invention is to establish two nozzles for conducting the oil to the bearings by means of independent ducts, so that each bearing receives the oil through an independent duct, this solution being applicable for hydraulic rotary cylinders requiring optimum lubrication.

### BACKGROUND TO THE INVENTION

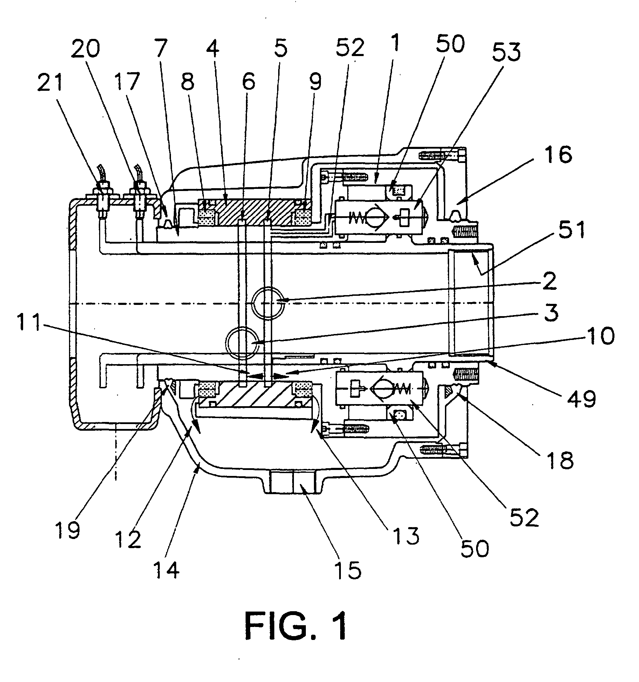

In the Spanish utility model number 273099, an hydraulic rotary cylinder is described which uses a particular lubrication technique, as shown in figure 1 which is attached as the state of the technique.

The component represented in this figure 1 consists of a hollow cylinder (1) which houses in its interior, with a capacity for axial movement, the hollow shaft (49) of the piston which externally forms the piston (50) itself The hollow shaft (1) has a thread (51) for coupling the tool which needs to be used, such as, for example, an hydraulic tie-down.

The axial movement of the piston (50) and thus that of its hollow shaft (49) is effected by hydraulic pressure. The oil under pressure enters alternately through the nozzles (2) and (3), in order to pass on to the annular chambers (5) and (6), from which point it is distributed through ducts to the chambers defined by the piston (50) in the hollow cylinder (1).

In the case of the annular chamber (5), the distribution of the oil is effected through the duct (52) made in the rotary shaft (7) up to one of the chambers, and the annular chamber (6) distributes it by means of a similar duct, which is not visible in the cross-section view of this figure, up to the opposite chamber defined by the piston (50).

The supply of oil for these chambers is effected through the non-return pressure valves (52 - 53) respectively, which are pilot-operated and work in opposite directions.

Oil is applied under pressure in an alternating manner, through the nozzles (2) or (3), releasing the pressure of the other nozzle in order to allow the outflow of oil through it. In this way, hydraulic pressure is applied to one of the chambers which the piston (50) defines, that is, to one side or the other of the piston, in order to thus achieve the axial movement of the hollow shaft (49).

The oil in the chamber where pressure is not applied, leaves through the respective non-return valve, moving through the circuit in a reverse direction in order to return to the hydraulic base.

The axial position of the hollow shaft (49) is determined by means of the electronic detectors (20) and (21), in order to synchronise the machine during its operation.

The turning of the rotary shaft (7) is effected on the bearings (8) and (9) of the distribution piece (4) which remains in a fixed position. When the hydraulic pressure is applied to the annular chamber (5), there is a slight leak or drainage of oil through a small opening existing between the distribution piece (4) and the rotary shaft (7) in the direction indicated by the arrows (10) and (11), in order to allow a smooth rotation of the rotary shaft (7) lubricating its contact with the distribution piece (4). This drainage of oil continues its route towards the bearing (9) and the annular chamber (6).

The drainage of oil does not lubricate both bearings (8) and (9), as the oil which drains in the direction of the arrow (10) only oils bearing (9), because the drainage in the direction of the arrow (11) goes to the annular chamber (6) which is free from pressure, as the hydraulic pressure is being applied in the annular chamber (5), for which reason the said drainage of oil flows through the annular chamber (6) in order to return to the oil deposit of the pressure pump or hydraulic base.

On cutting off the drainage of oil in the annular chamber (6), the oil no longer flows in the direction of the arrow (11) towards bearing (8), for which reason, this bearing does not receive oil until the provision of pressure through the annular chamber (6) alternates and the pressure in the annular chamber (5) is released. When this change occurs in the injection of pressure into the other chamber, in order to move the hollow shaft (49) in the other direction, the same process is repeated, which this time affects bearing (9).

In these devices, the simultaneous lubrication of both bearings (8) and (9) is very important, due to the high speeds to which cylinders of this type are subjected, and which, with current techniques, lubricate in an alternating manner in response to the change in the application of hydraulic pressure, and never both at the same time.

The oil drained after lubricating bearing (8) or bearing (9) moves in the direction indicated by the arrows (12) and (13) up to the oil catch (14), in order to return it through duct (15) to the deposit of the hydraulic base.

Oil-breaking catchers are located at the ends of the rotary shaft (7) and the hollow cylinder (1), which prevent any left-over oil from leaking to the outside of the cylinder and, by means of their circular grooves (16) and (17), they conduct the oil to the collection casing (14) through ducts (18) and (19).

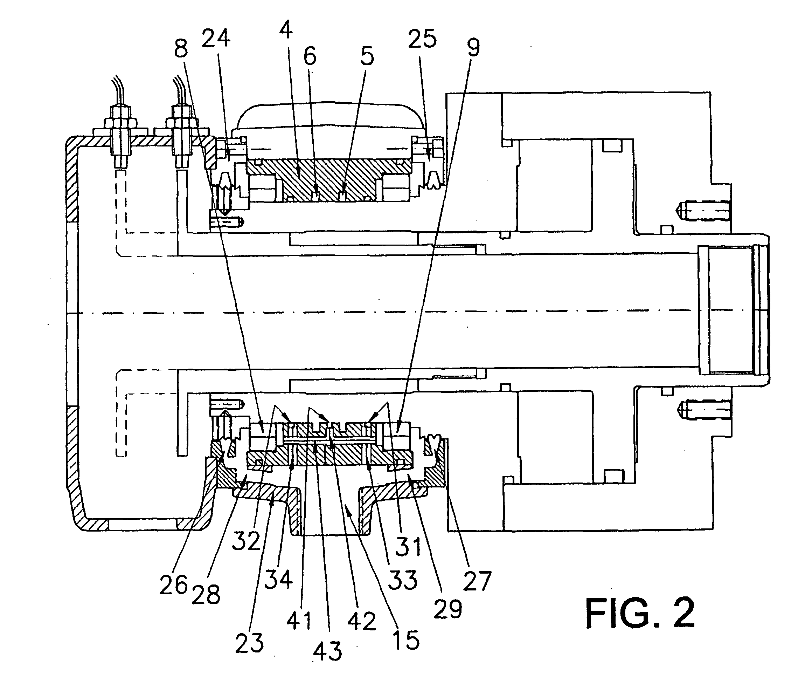

Over time and with technological progress, in the other designs, the collection casing (14) has been shortened, as shown in figure 2, without altering the essence of the mechanism, however, on shortening the collector (14), new problems arise.

In this figure 2, all of the components are the same and operate in the same manner as those in figure 1; only the shape of some of these components varies and the new oil collector (23) is presented, which has oil-collecting lids (24) and (25) with the same functions as the earlier devices and which carry the oil-breaking grooves (26) and (27) which return the oil through ducts (28) and (29) to the collector (23).

The reduction in the size of the collector (23) and the lids (24) and (25) with respect to the model shown in figure 1 has brought about the need for cutting back the outflow of the drainage oil, which cannot be conducted on account of the aforementioned reduction of space and thus it spills to the outside.

In order to solve this problem, two new annular chambers (31) and (32) have been introduced to the pressure distribution piece (4) carrying the annular chambers (5) and (6), at the cylindrical ends of its internal periphery, and close to the bearings (8) and (9). These chambers (31) and (32) have been connected with the ducts (33) and (34) in order to return the oil directly to the collector (23), as the ducts (28) and (29) cannot do so completely on account of their reduced size.

This solution heightens the problem of lubricating the bearings (8) and (9), which, if in the case of the model shown in figure 1, lubricated alternately, in this case, one bearing is not oiled and the other is oiled very deficiently. This incomplete oiling brings about problems of overheating, breakdowns and their ensuing risks.

### DESCRIPTION OF THE INVENTION

The improvements introduced in hydraulic rotary cylinders which have been developed in this invention make it possible for the bearings to be constantly and simultaneously oiled, thus improving their operation considerably, by reducing their operating temperature, increasing their safety coefficient in relation to breakdowns and accidents, and as a result, extending the useful lifetime of the device.

For the same reasons, it is possible to achieve a greater number of revolutions in the operation of the machine.

The characteristics of these improvements make it possible to apply them to hydraulic rotary cylinders with large or shortened oil collection casings, or with no casing at all, by effecting the collection of the oil directly from the distribution piece with a special drainage catcher.

In order to achieve these significant advantages, the invention consists of effecting an independent nozzle on the pressure distribution piece between the two annular chambers, which is extended by ducts through which it allows the oil to pass to both bearings, lubricating them simultaneously.

In this way, with the hydraulic pressure being applied in one or the other annular chamber, this nozzle and ducts constitute an alternative channel for the passage of oil, which prevents it from flowing completely towards the chamber which is free from pressure, thus giving rise to the problems mentioned earlier, and which also serves to guide the oil to both bearings simultaneously and independently of whichever annular chamber is under pressure.

This type of oiling can be optimised, and in fact should be in certain types of hydraulic rotary cylinders, such as, for example, cylinders driving borers and gripping chucks in production or numerical control lathes.

Thus, for this case, a variation has been designed or, in other words, an additional improvement based on replacing the single nozzle referred to earlier for the intake of oil, with two independent nozzles, each of which is connected to ducts which are also independent and lead to the respective bearings.

On the basis of the independent nozzles and ducts introduced, it is possible for each bearing to have its own channel of lubricating oil supply, which provides a greater supply of this fluid to each bearing and consequently a better lubrication.

This increase in the quantity and the individualised supply of oil constitutes a more effective and appropriate lubrication for certain type of hydraulic rotary cylinders, such as those which drive borers and gripping chucks in production or numerical control lathes.

### DESCRIPTION OF THE DRAWINGS

In order to complement the description provided herein and for the purpose of helping to convey a better understanding of the characteristics of the invention, in accordance with a preferred example of a practical rendering of same, a set of drawings is attached as a integral part of this description, in which, on an illustrative and non-restrictive basis, the following aspects are shown:
**Figure 1.-** Shows a sectional side view of a known hydraulic rotary cylinder, which serves to illustrate the problems existing in these mechanisms. In the left part of the figure, and drawn with a finer line, the axial movement of the hollow shaft and its piston is shown.
**Figure 2.-** Shows a similar view to that shown in figure one above for the purpose of illustrating the state of the technique and is centred on the problems presented by the models with a shortened oil collector. In this figure, the improvements of the invention are also incorporated.
**Figure 3.-** Shows a sectional side view of an hydraulic rotary cylinder which incorporates the improvements which are the object of this invention.
**Figure 4.-** Shows a sectional side view of an hydraulic rotary cylinder with the improvements of the invention for instances of a shortened oil collection casing. It also shows a sectional front view in which the said improvements are seen from this perspective.
**Figure 5.-** Shows a sectional side view of a variation for implementing the invention.
**Figure 6.-** Shows an elevational side and front sectional view such as those in figure 4, but with the implementation variation in which two nozzles are included.
**Figure 7.-** Shows, finally, a side view of a complete rotary cylinder which serves to illustrate the implementation variation represented in the preceding figure.

### PREFERRED EMBODIMENT OF THE INVENTION

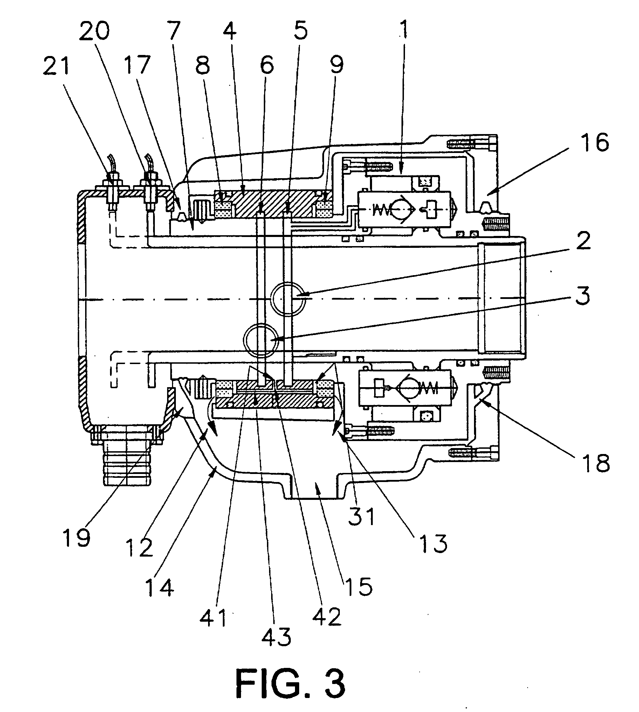

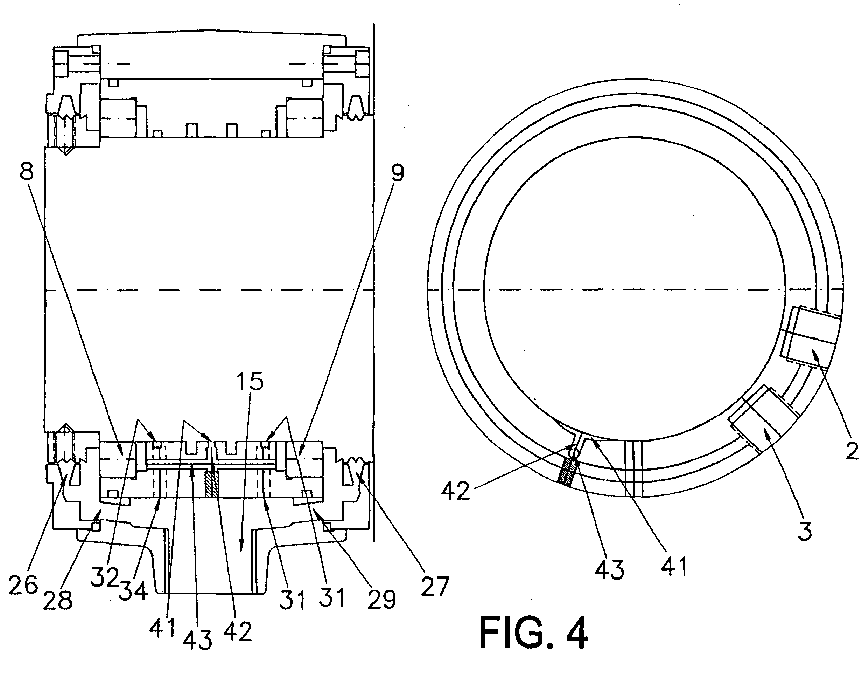

By observing figure 3, it can be understood that the invention consists of rendering a nozzle (41) on the pressure distribution piece (4) and between annular chamber (5) and annular chamber (6), also visible in the front section of figure 4.

This nozzle (41) is extended in duct (42) arranged in a radial direction with respect to the rotation axis of the cylinder, which in turn is connected to the duct (43) arranged in an axial direction, which connects directly to the sides of the bearings (8) and (9), thus constituting a direct channel for the drainage oil to pass on to the bearings (8) and (9).

In this way, the passage made up by the nozzle (41) and the ducts (42) and (43), indistinctly of whichever annular chamber (5) or (6) is supplied with hydraulic pressure, allows the drainage of oil which, instead of passing completely through the pressure-free annular chamber, does so through the nozzle (41) and duct (42), being distributed through the duct (43) to the bearings (8) and (9) simultaneously, effectively lubricating both bearings throughout the operating time of the machine.

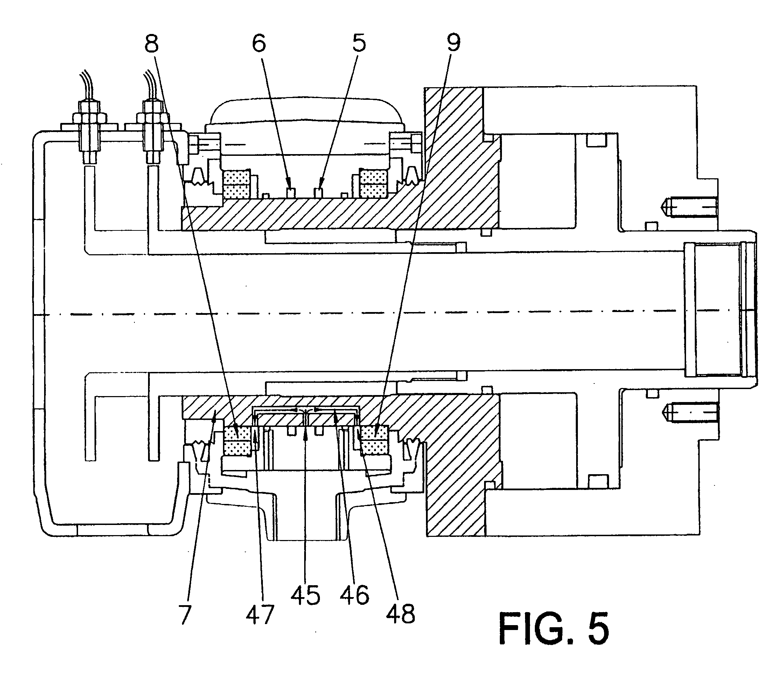

A variation has been foreseen in the implementation of the invention, applicable to specific models of rotary cylinders, or in order to adapt to certain applications of the invention. In this variation, the channel for the passage of oil is effected in the body of the rotary shaft (7) instead of the pressure distribution piece (4), as is shown in figure 5.

This channel is constituted in a similar manner by means of the nozzle (45) between the annular chambers (5) and (6), which, in a radial directions, connects with the duct (46) arranged in a linear direction, which in this variation is extended in nozzles (47) and (48), also radial, next to the bearings (8) and (9) to which the oil is supplied, also in a continuous and simultaneous manner.

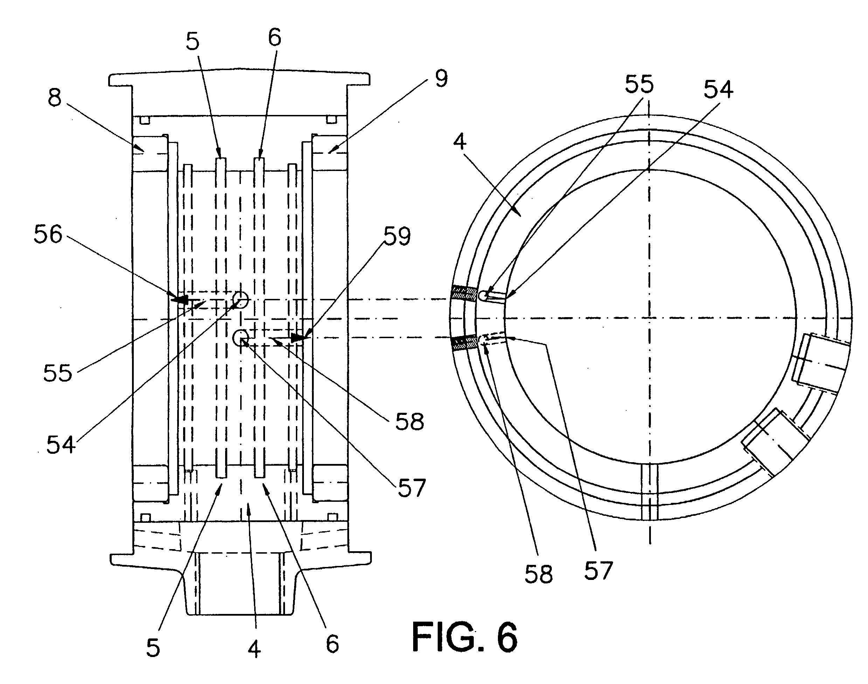

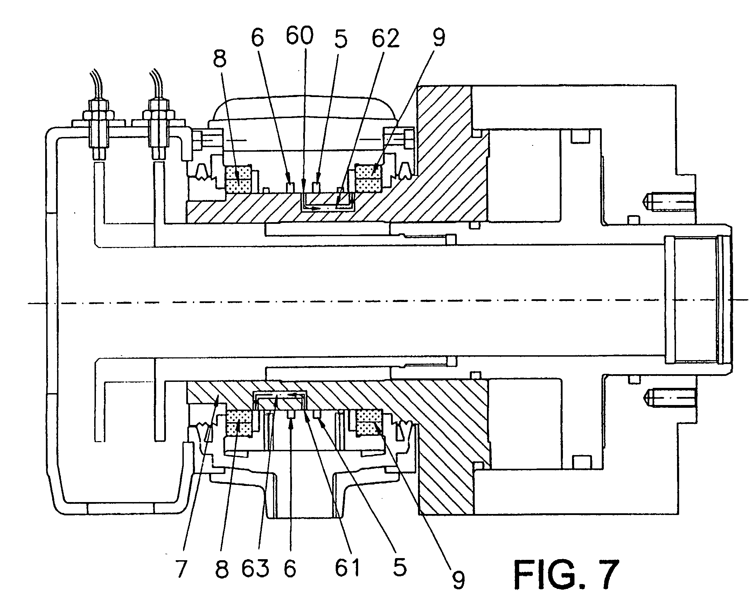

In a variation of the implementation shown in figures 6 and 7, it can be seen how between the annular chambers (5) and (6) there is a radial opening corresponding to the duct (54) which is extended in an axial direction in duct (55), which leads to bearing (8). This opening acts as a nozzle, allowing the oil originating from the annular chamber under pressure, regardless of whether this is annular chamber (5) or annular chamber (6), to flow through duct (54) and duct (55) in order to reach the bearing (8), as indicated by the arrow (56) in figure 6.

In the same way, between the two chambers (5) and (6), there is an opening corresponding to duct (57), with a radial projection and extended axially into duct (58) which leads to bearing (9). These ducts (57) and (58) allow a part of the drainage of the oil from one of the annular chambers to flow towards bearing (9), as is indicated by the arrow (59) in figure 6 itself.

Referring back to ducts (54) and (57), it can be seen how they are separated in a radial manner one from the other, constituting, together with the respective ducts (55) and (58), independent channels for the individualised drainage of the oil, one for bearing (8) and the other for bearing (9).

The said independent channels achieve an individualised oiling of the bearings, and at the same time allow a regulated and independent drainage of the oil reaching the bearings, for which reason they are oiled more regularly.

As can be observed in figure 7, in an implementation variation, the independent oiling ducts are rendered in the rotary shaft (7) instead of the distribution piece (4), thus achieving the same effect and advantages sought.

Specifically, the ducts (60) and (61), with a radial separation between them, are arranged in the rotary shaft (7) and connect respectively with ducts (62) and (63), making independent drainage to the bearing (8) and (9) possible.

## Claims

1. Hydraulic rotary cylinder for use in machine tools for acting on work tools which is comprised of a hollow cylinder (1) which houses a hollow shaft (49) which forms a piston (50), which can be moved in an axial direction by means of the alternating provision of pressure through nozzles (2, 3), and where the rotation of a rotary shaft (7) takes place on bearings (8, 9) of a pressure distribution piece (4) having annular chambers (5, 6), and with the intention of achieving a more satisfactory oiling of the bearings, **characterised in that** a nozzle (41) is incorporated in the pressure distribution piece (4) between the annular chambers (5, 6) and is extended as a duct (42) in a radial direction, which in turn connects with a duct (43) arranged in the axial direction of the device, which connects directly to the bearings (8, 9), thus constituting a direct channel for the passage of the drainage oil to the bearings (8, 9), originating indistinctly from any of the annular chambers (5, 6), which is supplied with hydraulic pressure at any given moment, with the intention of avoiding drainage of the entire amount of oil towards the annular chambers without pressure, by directing the oil to both bearings (8, 9) simultaneously and in a continuous manner throughout the duration of the operation of the device, whereby the operating temperature is reduced, the operation of the device and its safety coefficient are improved, and it is possible to achieve a higher number of revolutions.

2. Hydraulic rotary cylinder according to claim 1 and , in order to adapt the invention to certain models of cylinders and their possible applications, the channel for the passage of oil is effected in the body of the rotary shaft (7) instead of the pressure distribution piece (4) **characterised in that** in the body of the rotary shaft (7) a nozzle (45) is opened between the annular chambers (5, 6), which in a radial direction is connected to a duct (46) arranged in an axial direction, which in turn is extended to radial nozzles (47, 48) which allow passage to the bearings (8, 9), in order to constitute a channel for direct passage of the drainage oil to the said bearings, lubricating them in a continuous and simultaneous manner.

3. Hydraulic rotary cylinders, according to claims 1 and 2, **characterised by** either a large oil collecting casing, a shortened casing or no oil collecting casing.

4. Hydraulic rotary cylinders, according to the preceding claims, **characterised in that** in the pressure distribution piece (4), between the annular chambers (5, 6), ducts (54, 57) are opened, both in a radial direction and with a radial separation, which are extended respectively to the axial ducts (55, 58) which reach the bearings (8, 9), in such a way that these ducts constitute independent oil drainage channels leading form the annular chambers (5, 6), respectively achieving an independent and more regular oiling of the bearings (8, 9).

5. Hydraulic rotary cylinder, according to claim 4, **characterised in that** the independent channels for the individualised oiling of the bearings (8, 9) are effected in the rotary shaft (7) instead of the distribution piece (4) using in this case ducts (60, 61), both radial and separated, reaching the relevant bearings through ducts (63, 64).

## Patentansprüche

1. Hydraulischer Rotationszylinder mit ringförmigen Kammern (5, 6), zu dem ein hohler Zylinder (1) gehört, der eine hohle Welle (49) aufnimmt, die einen Kolben (50) bildet, der in axialer Richtung bewegt werden kann mittels der alternierenden Anwendung von Druck durch Düsen (2, 3) und wobei die Rotation einer Rotationswelle (7) auf Kugellagern (8, 9) eines Elements zur Druckverteilung (4) stattfindet zur Anwendung in Maschinenwerkzeugen zur Einwirkung auf die Arbeitswerkzeuge und mit dem Zweck, eine zufriedenstellendere Schmierung der Kugellager zu erreichen, **dadurch gekennzeichnet, dass** die Düse (41) Teil des Elements zur Druckverteilung (4) zwischen den ringförmigen Kammern (5, 6) ist und als Leitung (42) radial weitergeführt wird, die ihrerseits mit einer Leitung (43) verbunden ist, die in axialer Richtung der Vorrichtung angebracht ist und direkt mit den Kugellagern (8, 9) verbunden ist, so dass sie einen direkten Kanal für den Durchlass des Drainageöls zu den Kugellagern (8, 9) bilden, wobei sie von jeder der ringförmigen Kammern (5, 6) ausgehen können, die mit hydraulischem Druck zu jedem gegebenen Zeitpunkt versehen werden, mit dem Ziel, die Drainage der gesamten Menge Öl zu den ringförmigen Kammern ohne Druck zu verhindern, indem das Öl auf beide Kugellager (8, 9) gleichzeitig und durchgehend während der Dauer des Betriebs der Vorrichtung gerichtet wird, wobei die Arbeitstemperatur herabgesetzt wird, der Betrieb der Vorrichtung und ihr Sicherheitskoeffizient erhöht werden und es möglich ist eine höhere Umdrehungsanzahl zu erreichen.

2. Hydraulischer Rotationszylinder gemäss Anspruch 1 und zur Anpassung der Erfindung an bestimmte Zylindermodelle und an deren mögliche Anwendungen, der Kanal für den Durchfluss des Öls durch den Körper der Rotationswelle (7) durchführend statt durch das Element zur Druckverteilung (4), **dadurch gekennzeichnet, dass** der Körper der Rotationswelle (7) eine Düse (45) zwischen den ringförmigen Kammern (5, 6) aufweist, die in radialer Richtung an eine Leitung (46) angeschlossen ist, die in einer axialen Richtung angeordnet ist und ihrerseits in einer radialen Düse (47, 48) weitervertäuft, die den Durchfluss zu den Kugellagern (8, 9) ermöglicht, um einen Kanal zu bilden für den direkten Durchfluss des Drainageöls zu den besagten Kugellagern, womit diese ständig und gleichzeitig geschmiert werden.

3. Hydraulischer Rotationszylinder gemäss den Ansprüchen 1 und 2, **gekennzeichnet durch** einen grossen Sammelbehälter, einen gekürzten Behälter oder gar keinen Ölsammmelbehälter.

4. Hydraulischer Rotationszylinder gemäss dem vorgehenden Anspruch, dadurch gekennzeicht, dass in dem Element zur Druckverteilung (4) zwischen den ringförmigen Kammern (5, 6), Leitungen (54, 57) geöffnet werden, beide in radialer Richtung und mit einem radialen Abstand, die jeweils zu den axialen Leitungen (55, 58) hin verlängert werden, die die Kugellager (8, 9) erreichen, so dass diese Leitungen unabhängige Öldrainagekanäle bilden, die von den ringförmigen Kammern (5 bzw. 6) wegführen, womit eine unabhängige und gleichförmigere Schmierung der Kugellager (8, 9) erreicht wird.

5. Hydraulischer Rotationszylinder gemäss Anspruch 4, **dadurch gekennzeichnet, dass** die unabhängigen Kanäle für die individualisierte Schmierung der Kugellager (8, 9) in der Rotationswelle (7) durchgeführt werden, anstatt in dem Element zur Verteilung (4), wobei in diesem Fall Leitungen (60, 61) verwendet werden, di esowohl radial als auch im Abstand zueinander verlaufen und die entsprechenden Kugellager durch Leitungen (63, 64) erreichen.

## Revendications

1. Cylindre rotatif hydraulique à utiliser dans les machines outils pour agir sur les outils de travail qui est constitué par un cylindre creux (1) qui loge un arbre creux (49) qui forme un piston (50), lequel peut se déplacer dans une direction axiale au moyen de la provision alternative de pression à travers les buses (2, 3), et où la rotation d'un arbre rotatif (7) a lieu sur les coussinets (8, 9) d'une pièce de distribution de pression (4) ayant des chambres annulaires (5, 6) et dans l'intention de réaliser un graissage plus satisfaisant des coussinets, **caractérisé en ce qu'**une buse (41) est incorporée dans la pièce de distribution de pression (4) entre les chambres annulaires (5, 6) et qu'elle s'étend sous forme de conduite (42) dans une direction radiale, laquelle à son tour est reliée à une conduite (43) disposée dans la direction axiale du dispositif, qui se relie directement aux coussinets (8, 9), en constituant ainsi un canal direct pour le passage de l'huile de drainage des coussinets (8, 9), qui se crée indifféremment à partir de l'une quelconque des chambres annulaires (5, 6), laquelle est fournie à pression hydraulique à un moment donné quelconque, dans l'intention d'éviter le drainage de toute la quantité d'huile allant vers les chambres annulaires sans pression, en dirigeant l'huile vers les deux coussinets (8, 9) simultanément et d'une manière continue tout le long de la durée de l'opération du dispositif, en réduisant de la sorte la température opérationnelle, le fonctionnement du dispositif et son coefficient de sécurité sont améliorés et il est possible d'effectuer un plus grand nombre de tours.

2. Cylindre rotatif hydraulique selon la revendication 1 et, afin d'adapter l'invention à certains modèles de cylindres et à leurs possibles applications, le canal pour le passage de l'huile est effectué dans le corps de l'arbre rotatif (7) au lieu de l'être dans la pièce de distribution de pression (4), **caractérisé en ce que** dans le corps de l'arbre rotatif (7) une buse (45) est ouverte entre les chambres annulaires (5, 6), laquelle est reliée dans une direction radiale à une conduite (46) disposée dans une direction axiale, qui à son tour s'étend vers les buses radiales (47, 48) qui permettent le passage vers les coussinets (8, 9) afin de constituer un canal pour le passage direct de l'huile de drainage vers les coussinets, en les lubrifiant d'une manière continue et simultanée.

3. Cylindre rotatif hydraulique selon les revendications 1 et 2, **caractérisé par**, soit un boîtier collecteur, un boîtier plus réduit ou l'absence de boîtier collecteur.

4. Cylindre rotatif hydraulique, selon les revendications précédentes, **caractérisé en ce que** dans la pièce de distribution de pression (4), entre les chambres annulaires (5, 6), les conduites (54, 57) sont ouvertes, en se trouvant les deux dans une direction radiale et en ayant une séparation radiale, lesquelles s'étendent respectivement vers les conduites axiales (55, 58) qui atteignent les coussinets (8, 9), de manière à ce que les conduites constituent des canaux indépendants de drainage d'huile qui sortent des chambres annulaires (5, 6), en réalisant respectivement un graissage indépendant et plus régulier des coussinets (8, 9).

5. Cylindre rotatif hydraulique, selon la revendication 4, **caractérisé en ce que** les canaux indépendants pour le graissage individualisé des coussinets (8, 9) sont effectués dans l'arbre rotatif (7), au lieu de l'être dans la pièce de distribution (4) en utilisant dans ce cas les conduites (60, 61), les deux étant radiales et séparées, en atteignant les coussinets correspondants à travers les conduites (63, 64).
